# EUROPEAN PATENT SPECIFICATION

(11) **EP 3 627 380 B1**
(45) Date of publication and mention of the grant of the patent: **06.09.2023**
(21) Application number: 18196375.2
(22) Date of filing: 24.09.2018
(51) Int. Cl.: G06F 18/25, G06V 10/80, G06V 40/13, G06V 40/12

(54) **A METHOD OF VERIFYING THE ACQUISITION OF AN INDIVIDUAL'S BIOMETRIC DATA**
VERFAHREN ZUM VERIFIZIEREN DER ERFASSUNG DER BIOMETRISCHEN DATEN EINES INDIVIDUUMS
PROCÉDÉ DE VÉRIFICATION DE L'ACQUISITION DE DONNÉES BIOMÉTRIQUES D'UN INDIVIDU

(43) Date of publication of application: 25.03.2020
(73) Proprietor: Idemia Identity & Security France, 92400 Courbevoie (FR)
(72) Inventor: JAROSZ, Hervé, 92130 Issy-Les-Moulineaux (FR); MYSORE, Ravishankar, 92130 Issy-Les-Moulineaux (FR); DURAISAMY, Loganathan, 92130 Issy-Les-Moulineaux (FR); KANDPAL, Mohit, 92130 Issy-Les-Moulineaux (FR)
(74) Representative: Idemia

(56) References cited:
- US-B1- 9 934 421
- Gian Luca Marcialis ET AL: "Fingerprint Verification by Decision-Level Fusion of Optical and Capacitive Sensors" In: "Serious Games", 15 May 2004 (2004-05-15), Springer International Publishing, Cham 032682, XP55573462, ISSN: 0302-9743 ISBN: 978-3-642-38979-5 vol. 3087, pages 307-317, DOI: 10.1007/978-3-540-25976-3_28, * section 2 *
- FAN YANG ET AL: "Information Fusion of Biometrics Based-on Fingerprint, Hand-geometry and Palm-print", 2007 IEEE WORKSHOP ON AUTOMATIC IDENTIFICATION ADVANCED TECHNOLOGIES, 7 June 2007 (2007-06-07), pages 247-252, XP55573643, DOI: 10.1109/AUTOID.2007.380628 ISBN: 978-1-4244-1300-3
- Arun Ross ET AL: "Handbook of Multibiometrics : Human Recognition Systems", , 11 August 2006 (2006-08-11), pages 29-54, XP55576384, DOI: 10.1016/j.patcog.2007.09.002 Retrieved from the Internet: URL:https://www.springer.com/gp/book/97803 87222967 [retrieved on 2019-04-02]

## Description

The invention relates to the field of methods of preventing the occurrence of fraud in the acquisition of an individual's biometric data.

### BACKGROUND OF THE INVENTION

Nowadays, biometric data is being used more and more for identifying or authenticating a particular individual who is one of a determined population of reference individuals.

The use of biometric data for identifying or authenticating the particular individual requires a biometric database to be constituted beforehand. For each reference individual, the biometric database contains an identifier and reference biometric data associated with the identifier. The biometric data of the particular individual is then compared with the reference biometric data.

Setting up the biometric database requires an "enrolment" campaign to be carried out, i.e. a campaign of registering biometric data for all of the reference individuals of the determined population (or at least for as great as possible a number of reference individuals).

During the enrolment campaign, it is possible that certain malicious individuals might seek to falsify their enrolment.

When the biometric data comprises fingerprints from a plurality of fingers of a given hand, e.g. acquired using a fingerprint scanner having an acquisition surface on which the fingers are to be pressed, two main types of fraud are to be feared.

A first type of fraud consists in placing the fingers of two different people on the scanner. Typically, if the scanner is designed to acquire the fingerprints of four fingers on one hand, a fraudulent individual places two fingers on the scanner and asks an accomplice also to place two fingers on the scanner. Naturally, this first type of fraud can be detected by an operator in charge of monitoring enrolment. Nevertheless, it is not impossible that the operator might be an accomplice. Furthermore, when analyzing biometric data, it is very complicated to identify fraudulent individuals since only the fingerprints of a small number of fingers are acquired for each fraudulent individual (two fingers out of four in this example), said fingers furthermore often being wrongly positioned on the scanner.

A second type of fraud consists in using a fake finger or a portion of a fake finger, e.g. made out of silicone or gelatin, and having a fingerprint reproduced thereon. Once more, the operator should be able to detect the occurrence of such a fraud, providing the operator is not an accomplice to the fraud. Document US 9934421B1 (NILSSON RENÉ [SE]), 3 April 2018, discloses a fingerprint sensor which acquires an image of the fingerprint of a finger and an optical sensor which acquires an image of a portion of the finger neighboring to that of the fingerprint.

### OBJECT OF THE INVENTION

An object of the invention is to prevent the occurrence of those types of fraud while acquiring biometric data of an individual.

### SUMMARY OF THE INVENTION

In order to achieve this objective, there is provided a method in accordance with claim 1.

The first morphological characteristic of the individual comprises fingerprints of the individual. Under such circumstances, analyzing the second portion of the image makes it possible to ensure that a fake finger is not used and that the fingers do indeed belong to the same hand of one individual. Comparing the first biometric data with the second biometric data then makes it possible to ensure that the data does indeed correspond, and thus that the first biometric data was acquired without that acquisition being falsified by fraudulent action or by accidental action.

The invention can be better understood in the light of the following description of particular, non-limiting implementations of the invention.

### BRIEF DESCRIPTION OF THE DRAWINGS

Reference is made to the accompanying drawings, in which:
- Figure 1 shows the steps of the method in a first implementation of the invention; and
- Figure 2 shows the steps of the method in a third implementation of the invention.

### DETAILED DESCRIPTION OF THE INVENTION

In a first implementation of the invention, the method is performed to verify the integrity of a biometric data acquisition carried out during the enrollment of a particular individual.

The term "integrity" is used herein to mean that the acquisition has not been falsified either by fraudulent action or by accidental action.

The particular individual belongs to a determined population of reference individuals. If verifying the integrity of the acquisition is successful, then the particular individual is enrolled in a biometric database as being a reference individual.

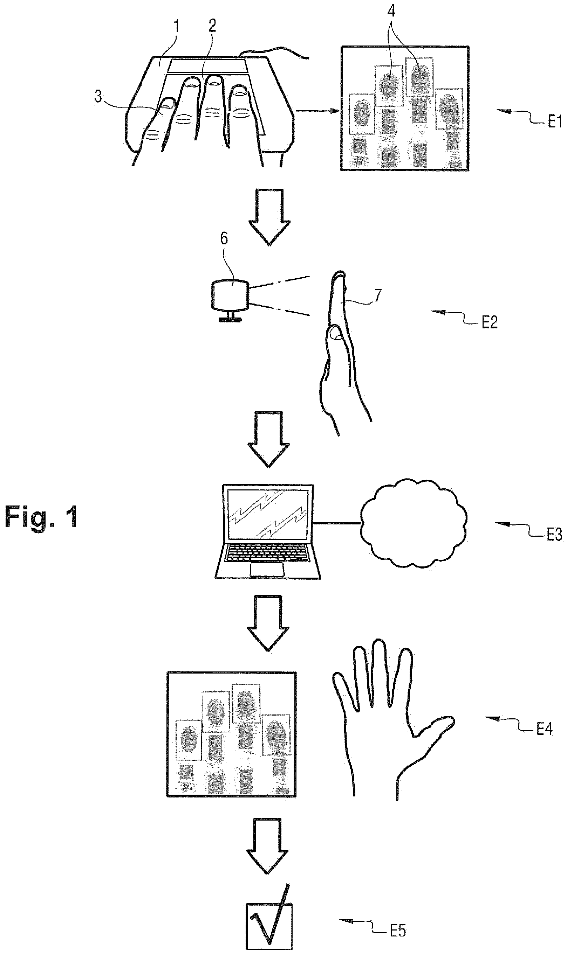

With reference to Figure 1, the verification method begins with a first acquisition step (E1) comprising using a biometric sensor to acquire first biometric data of the particular individual, which data is representative of a first morphological characteristic of the particular individual.

The biometric sensor is a fingerprint scanner 1 having an acquisition surface 2 on which a predefined number of fingers 3 of the same hand are to be applied.

The particular individual is to position the little finger, the ring finger, the middle finger, and the index finger of one hand on the acquisition surface 2, going from left to right in regular manner and parallel to one another.

The first morphological characteristic is thus constituted by the fingerprints 4 of these four fingers 3 of the particular individual.

First biometric data is thus obtained constituted by data characterizing the fingerprints 4. The first biometric data serves to form fingerprint images, each of which can be considered as being an alternation of crests and valleys. Each fingerprint image also includes a certain number of characteristic points known as "minutiae", which correspond by way of example to the end of a crest or to a crest dividing in two (bifurcation).

Thereafter, the verification method includes a second acquisition step (E2) comprising using a camera 6 to acquire at least one context image.

In this example, the particular individual needs to present the camera 6 with the inside face of the same hand 7 that was used for the first acquisition step. This camera 6 is referred to as a "context" camera.

The camera 6 may be a smartphone camera or a webcam, or indeed any other type of camera.

The camera 6 has a resolution that is typically equal to five megapixels or ten megapixels. The camera 6 includes an autofocus system and a flash system with one or more light-emitting diodes (LEDs). The LEDs are used to illuminate the hand 7 and thus the fingerprints 4 together with their environment while acquiring the context image(s). This illumination serves in particular to increase contrast between the crests and the valleys of the fingerprints, thereby improving the precision and the reliability of the acquisition.

A context image thus shows not only the fingerprints 4 of the fingers 3 of the reference individual's hand 7, but also the environment of the fingerprints 4, i.e. the entire hand 7 together with a zone surrounding the hand 7. This zone surrounding the hand 7 typically extends to several centimeters beyond the edges of the hand 7. Thus, the context image has a first image portion representative of the fingerprints 4 and a second image portion representative of the environment of the fingerprints 4. Naturally, the first image portion and the second image portion may overlap in part or completely, and may belong to a single context image or to different context images.

Thereafter, the verification method has an extraction step (E3) comprising extracting second biometric data representative of the fingerprints 4 from the first image portion. Once more, the second biometric data serves to form images of the fingerprints.

The verification method then has a verification step (E4) .

The verification step begins with first verification consisting in comparing the first biometric data with the second biometric data.

If the second biometric data corresponds to the first biometric data, i.e. if the comparison shows that both the first data and the second data comes from the same hand 7 of the same individual, then the first verification is validated. Otherwise, it is invalidated.

The verification step also comprises a second verification that consists in analyzing the second image portion in order to verify that the fingers 3 do indeed belong to one single hand 7. The analysis consists in particular of studying the outlines of the hand 7 facing the camera 6 in order to verify that the outlines do indeed correspond to one single hand 7. This second verification is made easier by the fact that the entire hand 7 together with its environment appear in the second image portion. It is thus easier with this larger view to verify whether the fingers of only one hand or of two different hands are present.

If the second verification shows that the fingers 3 do indeed belong to a single hand 7, the second verification is validated. Otherwise, it is invalidated.

The first and second verifications serve firstly to ensure that the same fingers 3 are used during the first acquisition step and during the second acquisition step, and secondly that those fingers 3 do indeed belong to one single hand 7 of a single individual.

The verification step also comprises a third verification consisting in analyzing the second image portion in order to verify that a fake finger or a portion of a fake finger has not been used.

Since the camera 6 acquires the entire hand 7 with its four fingers 3, it serves very effectively to detect a portion of a fake finger corresponding to the last phalanx. Such a fake finger portion gives rise to a discontinuity in the second image portion between phalanges.

If the third verification shows that a fake finger has not been used, the third verification is validated. Otherwise, it is invalidated.

It should be observed that it is also possible to detect the use of a fake finger or of a portion of a fake finger during the first acquisition step using the scanner 1. By using a contactless sensor (a camera 6) and a contact sensor (the scanner 1), it is possible to combine the results of fake finger detections performed using both sensors, and thereby further improve the effectiveness of the third verification.

When any one of the three verifications is invalidated, enrolment is blocked (either at Front End level or at Back End level).

An alarm signal may optionally be generated in order to warn an operator in charge of enrollment that a fraud is taking place. It is also possible to inform some other person, e.g. another operator or some authority (such as the police). It is also possible to attempt to determine the identity of the fraudulent individual(s) from the biometric data acquired or from the images produced by the camera 6.

If all three verifications are validated, then the integrity of the biometric data acquisition is approved (E5). The particular individual is enrolled. The particular individual is provided with an identification number associated with that individual's biometric data. The particular individual becomes a reference individual enrolled in the biometric database. That individual's biometric data becomes reference biometric data for use in future identifications and authentications.

The biometric data of the particular individual that is stored in the biometric database is the first biometric data as produced by the scanner 1. Typically, the scanner 1 is more precise and the first biometric data is of better quality and more reliable than the second biometric data.

There follows a description of a method in a second implementation of the invention.

In this method, in addition to acquiring the first biometric data of the particular individual, specifically representative of the fingerprints of four fingers on one hand, the first acquisition step also comprises acquiring third biometric data of the individual, representative of a second morphological characteristic of the finger(s) or of the hand.

This acquisition also makes use of the fingerprint scanner. The second morphological characteristic is the length or the width of a finger, the lengths or the widths of a plurality of fingers, or indeed the length or the width of the hand of the particular individual.

Furthermore, during the verification step, the analysis of the second image portion includes a fourth verification. This fourth verification consists in verifying that the second morphological characteristic on the second image portion (acquired during the second acquisition step using the camera), does indeed correspond to the third biometric data (acquired during the first acquisition step, by the scanner). It is thus verified that the length or the width of a finger, or indeed the lengths or the widths of a plurality of fingers, or indeed the length or the width of the hand that is presented in front of the camera does/do indeed correspond to the hand that had its fingers placed on the scanner.

This analysis of the second image portion serves to verify that the hand presented in front of the camera is indeed the hand of a single individual, with the fourth verification serving to verify that the same hand was indeed placed on the scanner and also presented in front of the camera, and thus in particular to verify that the enrollment is being performed by one and the same particular individual.

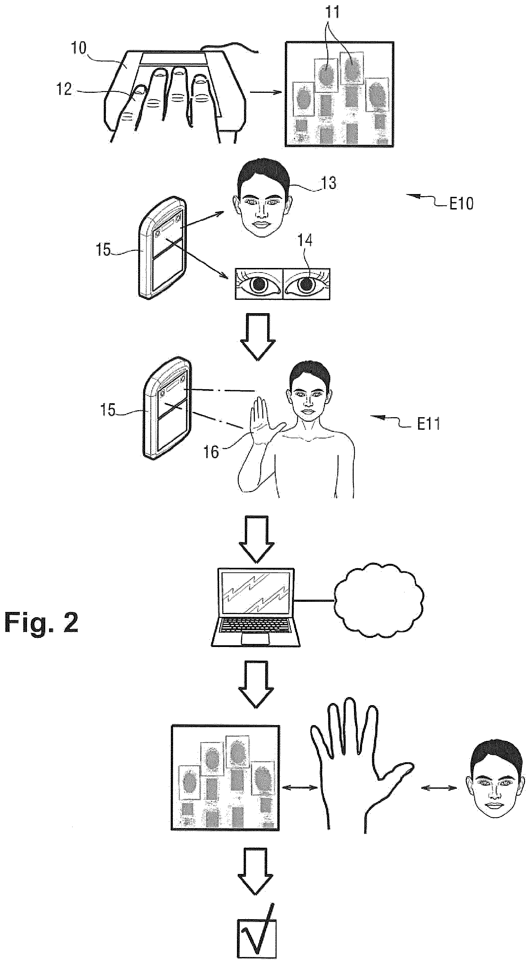

With reference to Figure 2 there follows a description of the method in a third implementation of the invention.

In this method, in addition to acquiring the first biometric data of the particular individual by using the scanner 10, specifically data representative of the fingerprints 11 of four fingers 12 of a single hand, the first acquisition step (E10) also comprises acquiring fourth biometric data of the particular individual, representative of a third morphological characteristic of the individual. The third morphological characteristic is the shape of the face 13 and/or characteristics of the iris 14 of an eye of the particular individual. In this example, an image is acquired both of the face 13 and of the iris 14 of the particular individual.

This acquisition that is performed during the first acquisition step makes use of the same acquisition appliance 15, which is an appliance that is portable and mobile. The acquisition appliance 15 comprises in particular a first camera having a resolution of 500 dots per inch (dpi) operating in the near infrared spectrum and thus particularly well suited to acquiring an image of the iris 14.

Thereafter, during the second acquisition step (E11), the particular individual presents the hand 16 in front of the acquisition appliance 15 to acquire the first morphological data (fingerprints) and also the second morphological data (the length or the width of a finger 12, or indeed lengths or widths of a plurality of fingers 12, or indeed the length or the width of the hand 16 of the particular individual).

Optionally, in the second acquisition step, a second camera of the acquisition appliance 15 is used that is different from the first camera. The second camera operates in the visible spectrum.

During the second acquisition step (E11), an image of the face 13 is also captured by the acquisition appliance 15. This image is used to establish fingerprint-face integrity. This verification is a manual verification.

The fourth biometric data may be used to consolidate verification of the acquisition.

For example, the fourth biometric data may be used to establish the integrity of the iris 14, i.e. both iris 14 belongs to the same face 13.

It is also possible, by making a comparison with the data in the biometric database, to verify that firstly the face 13 and/or the iris 14 and secondly the fingerprints 11 do indeed belong to one single person.

In the case where no data is available in biometric database, i.e. very first enrolment of the individual, verifications are still performed. These verifications may include the fingerprint-face integrity.

The fourth biometric data can also be used as reference biometric data and may be associated in the biometric database with the identification number of the particular individual.

It should be observed that regardless of the implementation of the invention, the "context" camera may also be used for filming and storing a video stream of the enrollment. The stream can be analyzed by a back end system to verify that the enrollment took place regularly. Video analysis software may be used.

The invention is not limited to the particular implementations described above, but on the contrary covers any variant coming within the ambit of the invention as defined by the claims.

In this description, the first morphological characteristic that is acquired twice over, i.e. during the first acquisition step (for enrollment and verification) and during the second acquisition step (for verification only), by means of two distinct sensors (scanner and camera), is itself constituted by fingerprints.

In this example, the method is performed immediately before enrolling a particular individual. Nevertheless, the method can also be used before performing any biometric recognition method, and in particular before authenticating or identifying a particular individual.

The method makes it possible to detect a fraud involving the integrity of a biometric data acquisition, however it can also detect an error due to accident, e.g. due to poor understanding on the part of the particular individual or of the operator in charge of enrollment about the operations that need to be carried out for enrollment.

It should be observed that the verification steps, including analyzing the second image portion (i.e. the entire hand and its environment) can be performed automatically by any computer processor means, and also by an operator performing a simple visual comparison (or indeed by combining both of these methods).

It should also be observed that the extraction step and the verification steps can each be performed equally well at Front End level or at Back End level.

## Claims

1. A method of preventing the occurrence of fraud in the acquisition of an individual's biometric data, the method comprising:
- a first acquisition step (E1; E10) comprising using a biometric sensor (1; 10) to acquire first biometric data of the individual, representative of a first morphological characteristic of the individual comprising fingerprints of fingers of a hand of the individual;
- a second acquisition step (E2; E11) comprising using a camera (6) distinct from the biometric sensor to acquire at least one context image comprising a first image portion representative of said first morphological characteristic and a second image portion representative of the entire hand together with a zone surrounding the hand;
- an extraction step comprising extracting second biometric data representative of the first morphological characteristic from the first image portion; and
- verification steps comprising:
o verifying that both said data come from the same hand of the same individual by comparing the first biometric data with the second biometric data,
o verifying that the fingers belong to one single hand by analyzing the second image portion based on the outline of the hand, and
o verifying that a fake finger or a portion of a fake finger has not been used by detecting a discontinuity in the second image portion between phalanges of the fingers.

2. A method according to claim 1, wherein the first acquisition step further comprises using the biometric sensor (1; 10) to acquire third biometric data of the individual, representative of a second morphological characteristic of the finger(s) or of a hand, and wherein the verification steps further comprise verifying that the second morphological characteristic on the second image portion does indeed correspond with the third biometric data by analyzing the second image portion.

3. A method according to claim 2, wherein the second morphological characteristic is the length or the width of a finger or indeed the lengths or the widths of a plurality of fingers, or indeed the length or the width of the hand of the individual.

4. A method according to any preceding claim, wherein the biometric sensor is a fingerprint scanner having an acquisition surface (2) on which a predefined number of fingers of one single hand are to be applied.

5. A method according to any preceding claim, wherein the first acquisition step further comprises acquiring fourth biometric data of the individual, representative of a third morphological characteristic of the individual.

6. A method according to any preceding claim, wherein the camera includes a LED for illuminating the first morphological characteristic and its environment while acquiring the context image(s).

7. A method according to any preceding claim, being followed by enrollment, identification, or authentication of the individual, making use solely of the first biometric data.

## Patentansprüche

1. Verfahren zur Verhinderung des Auftretens von Betrug bei der Erfassung von biometrischen Daten eines Individuums, wobei das Verfahren umfasst:
- einen ersten Erfassungsschritt (E1; E10), umfassend die Verwendung eines biometrischen Sensors (1; 10) zum Erfassen erster biometrischer Daten des Individuums, die ein erstes morphologisches Merkmal des Individuums wiedergeben, umfassend Fingerabdrücke von Fingern einer Hand des Individuums;
- einen zweiten Erfassungsschritt (E2; E11), umfassend die Verwendung einer von dem biometrischen Sensor unterschiedlichen Kamera (6), um mindestens ein Kontextbild zu erfassen, umfassend einen ersten Bildteil, der das erste morphologische Merkmal wiedergibt, und einen zweiten Bildteil, der die gesamte Hand zusammen mit einem die Hand umgebenden Bereich wiedergibt;
- einen Extraktionsschritt, umfassend das Extrahieren zweiter biometrischer Daten, die das erste morphologische Merkmal aus dem ersten Bildteil wiedergeben; und
- Verifizierungsschritte, umfassend:
o Verifizieren, dass beide Daten von der gleichen Hand des gleichen Individuums stammen, mittels Vergleich der ersten biometrischen Daten mit den zweiten biometrischen Daten,
o Verifizieren, dass die Finger zu einer einzelnen Hand gehören, durch Analysieren des zweiten Bildteils basierend auf dem Umriss der Hand, und
o Verifizieren, dass ein gefälschter Finger oder ein Teil eines gefälschten Fingers nicht verwendet wurde, mittels Detektion einer Diskontinuität in dem zweiten Bildteil zwischen Phalangen der Finger.

2. Verfahren nach Anspruch 1, wobei der erste Erfassungsschritt ferner die Verwendung des biometrischen Sensors (1; 10) umfasst, um dritte biometrische Daten des Individuums zu erfassen, die ein zweites morphologisches Merkmal des Fingers/der Finger oder einer Hand wiedergeben und wobei die Verifizierungsschritte ferner das Verifizieren umfassen, dass das zweite morphologische Merkmal des zweiten Bildteils tatsächlich den dritten biometrischen Daten entspricht, durch Analysieren des zweiten Bildteils.

3. Verfahren nach Anspruch 2, wobei das zweite morphologische Merkmal die Länge oder die Breite eines Fingers oder genauer die Längen oder die Breiten einer Mehrzahl von Fingern oder vielmehr die Länge oder die Breite der Hand des Individuums ist.

4. Verfahren nach einem der vorstehenden Ansprüche, wobei der biometrische Sensor ein Fingerabdruckscanner ist, der eine Erfassungsoberfläche (2) aufweist, auf die eine vordefinierte Anzahl von Fingern einer einzelnen Hand aufgelegt werden soll.

5. Verfahren nach einem der vorstehenden Ansprüche, wobei der erste Erfassungsschritt ferner das Erfassen vierter biometrischer Daten des Individuums umfasst, die ein drittes morphologisches Merkmal des Individuums wiedergeben.

6. Verfahren nach einem der vorstehenden Ansprüche, wobei die Kamera während der Erfassung des Kontextbildes/der Kontextbilder eine LED zur Beleuchtung des ersten morphologischen Merkmals und seiner Umgebung aufweist.

7. Verfahren nach einem der vorstehenden Ansprüche, gefolgt von Registrierung, Identifizierung oder Authentifizierung des Individuums unter Verwendung lediglich der ersten biometrischen Daten.

## Revendications

1. Procédé d'empêchement de la survenue d'une fraude lors de l'acquisition de données biométriques d'un individu, le procédé comprenant :
- une première étape d'acquisition (E1 ; E10) comprenant l'utilisation d'un capteur biométrique (1 ; 10) pour acquérir des premières données biométriques de l'individu, représentatives d'une première caractéristique morphologique de l'individu comprenant des empreintes digitales de doigts d'une main de l'individu ;
- une seconde étape d'acquisition (E2 ; E11) comprenant l'utilisation d'une caméra (6) distincte du capteur biométrique pour acquérir au moins une image de contexte comprenant une première partie d'image représentative de ladite première caractéristique morphologique et une seconde partie d'image représentative de la totalité de la main en association avec une zone entourant la main ;
- une étape d'extraction comprenant l'extraction de deuxièmes données biométriques de la première caractéristique morphologique à partir de la première partie d'image ; et
- des étapes de vérification comprenant :
o la vérification du fait que les données biométriques proviennent toutes de la même main du même individu en comparant les premières données biométriques avec les deuxièmes données biométriques ;
o la vérification du fait que les doigts appartiennent à une unique main en analysant la seconde partie d'image sur la base du contour de la main ; et
o la vérification du fait qu'un faux doigt ou qu'une partie d'un faux doigt n'a pas été utilisé(e) en détectant une discontinuité dans la seconde partie d'image entre des phalanges des doigts.

2. Procédé selon la revendication 1, dans lequel la première étape d'acquisition comprend en outre l'utilisation du capteur biométrique (1 ; 10) pour acquérir des troisièmes données biométriques de l'individu, représentatives d'une deuxième caractéristique morphologique du/des doigt(s) ou d'une main, et dans lequel les étapes de vérification comprennent en outre la vérification du fait que la deuxième caractéristique morphologique sur la seconde partie d'image correspond effectivement aux troisièmes données biométriques en analysant la seconde partie d'image.

3. Procédé selon la revendication 2, dans lequel la deuxième caractéristique morphologique est la longueur ou la largeur d'un doigt ou même les longueurs ou les largeurs d'une pluralité de doigts, ou même la longueur ou la largeur de la main de l'individu.

4. Procédé selon l'une quelconque des revendications précédentes, dans lequel le capteur biométrique est un lecteur d'empreintes digitales comportant une surface d'acquisition (2) sur laquelle un nombre prédéfini de doigts d'une unique main doivent être appliqués.

5. Procédé selon l'une quelconque des revendications précédentes, dans lequel la première étape d'acquisition comprend en outre l'acquisition de quatrièmes données biométriques de l'individu, représentatives d'une troisième caractéristique morphologique de l'individu.

6. Procédé selon l'une quelconque des revendications précédentes, dans lequel la caméra inclut une DEL pour éclairer la première caractéristique morphologique et son environnement pendant l'acquisition de l'image/des images de contexte.

7. Procédé selon l'une quelconque des revendications précédentes, lequel est suivi par l'enregistrement, l'identification ou l'authentification de l'individu, en utilisant seulement les premières données biométriques.
